## Europäisches Patentamt

## European Patent Office

## Office européen des brevets

(11) Veröffentlichungsnummer: **0 203 254**
A2

(12) **EUROPÄISCHE PATENTANMELDUNG**

(21) Anmeldenummer: **86101032.0**

(22) Anmeldetag: **25.01.86**

(51) Int. Cl.⁴: **A 01 K 7/06**

(30) Priorität: **25.05.85 DE 3519004**

(43) Veröffentlichungstag der Anmeldung: **03.12.86**
Patentblatt 86/49

(84) Benannte Vertragsstaaten: **BE CH DE FR IT LI NL**

(71) Anmelder: **Jos L. Meyer GmbH & Co., Industriegebiet Süd, D-2990 Papenburg 1 (DE)**

(72) Erfinder: **Appeldorn, Bernhard, Lüdeweg 21, D-2990 Papenburg 1 (DE)**

(74) Vertreter: **Jabbusch, Wolfgang, Dr., Elisabethstrasse 6, D-2900 Oldenburg (DE)**

(54) Selbsttränkebecken für ein Viehtransportschiff für Kühe und Schafe.

(57) Bei einem Selbsttränkebecken für ein Viehtransportschiff für Kühe und Schafe zur Selbsttränkung des transportierten Viehs während des Schiffstransportes mit wenigstens einem vom Vieh mittels eines Betätigungselementes betätigbaren Zulaufventil zur bedarfsweisen Einleitung von Wasser in eine Tränkwanne ist vorgesehen, daß die Tränkwanne rinnenförmig ausgebildet ist, daß über die gesamte Länge der Tränkwanne verteilt Zulaufventile angeordnet sind, und daß jeweils mehreren der Zulaufventile ein gemeinsames, sich über einen Abschnitt der Tränkwanne erstreckendes Betätigungselement zugeordnet.

Jedes Betätigungselement ist vorzugsweise eine um eine Schwenkachse schwenkbar gelagerte Betätigungsklappe und jedes Zulaufventil ist vorzugsweise ein Schwenkventil mit einem um eine Achse schwenkbaren Schwenkarm, wobei die Achse des Schwenkarmes parallel zur Schwenkachse der Betätigungsklappe ausgerichtet ist und die Betätigungsklappe an dem zur Öffnung des Zulaufventils unter Federdruck zu schwenkenden Schwenkarm des Zulaufventils anliegt.

Josef L. Meyer GmbH & Co., Industriegebiet Süd, 2990 Papenburg

Selbsttränkebecken für ein Viehtransportschiff für Kühe und Schafe

Die Erfindung betrifft ein Selbsttränkebecken für ein Viehtransportschiff für Kühe und Schafe zur Selbsttränkung des transportierten Viehes während des Schiffstransportes mit wenigstens einem vom Vieh mittels eines Betätigungselementes betätigbaren Zulaufventil zur bedarfsweisen Einleitung von Wasser in eine Tränkwanne.

Üblicherweise werden heutzutage in Viehställen, sowie auch auf Viehtransportschiffen zur Tränkung von Kühen fast ausschließlich Selbsttränkebecken installiert, die von den Tieren nach Bedarf selbständig betätigt werden können. Da das Vieh die Selbsttränkebecken nur nach Bedarf betätigt, haben diese den Vorteil, daß der Wasserverbrauch eingeschränkt wird und daß das in die Tränkwanne des Selbsttränkebeckens einlaufende Wasser immer frisch ist. Zur Tränkung von Schafen sind dagegen nur automatische Tränkebecken bekannt, bei denen durch ein Schwimmerventil oder ähnliches immer ein bestimmter Wasserstand im Tränkebecken gehalten wird. Bei diesen bekannten Tränkebekken ist also nicht gewährleistet, daß das angebotene Wasser immer frisch ist.

Auf Viehtransportschiffen muß auf dem zur Verfügung stehenden Raum möglichst viel Vieh untergebracht werden, um die Transportfahrten rentabel zu machen. Die Viehtransportschiffe werden von ihrer Ladekapazietät daher so ausgelegt, daß die Zahl der transportierten Tiere die Zahl der normalerweise in Ställen landwirtschaftlicher Betriebe untergebrachter Tiere weit übersteigt. Von dieser Anzahl transportierter Tiere hat, ständig ein großer Anteil, vielleicht ein Fünftel der Tiere, das Bedürfnis zu trinken. Da aus bekannten Selbsttränkebecken nur Kühe trinken können, und zwar jeweils nur ein Tier zur gleichen Zeit, müssen auf Viehtransportschiffen für Kühe und Schafe soviele Selbsttränkebecken und Tränkebecken für Schafe installiert sein, daß ein ausreichender Teil der Tiere gleichzeitig mit Trinkwasser versorgt werden kann. Diese große Zahl Tränkebecken nimmt aber nicht nur viel Raum ein, sondern die Installation der Tränkebecken, insbesondere die Verrohrung jedes einzelnen Tränkebeckens und die benötigten Tränkebecken selbst, sind in hohem Maße kostenaufwendig.

Der Erfindung liegt die Aufgabe zugrunde, ein Selbsttränkebecken für Vieh so weiterzubilden, daß mehrere Tiere daran gleichzeitig trinken können und eine einfache, kostensparende Konstruktion des Selbsttränkebeckens möglich ist.

Die Aufgabe ist erfindungsgemäß dadurch gelöst worden, daß die Tränkwanne rinnenförmig ausgebildet ist, daß über die gesamte Länge der Tränkwanne verteilt Zulaufventile angeordnet sind und daß jeweils mehreren der Zulaufventile ein gemeinsames, sich über einen Abschnitt der Tränkwanne erstreckendes, Betätigungselement zugeordnet ist.

Aus der rinnenförmig ausgebildeten Tränkwanne können mit Vorteil mehrere nebeneinander stehende Tiere gleichzeitig trinken. Die Zulaufventile werden über ein gemeinsames Betätigungselement betätigt, das sich über einen Abschnitt, vorzugsweise über die gesamte Länge der Tränkwanne erstreckt, so daß auch ein einzelnes Tier Wasser in die Tränkwanne einlaufen lassen kann, gleichgültig an welcher Stelle es das Betätigungselement betätigt. Da in der Regel mehrere Tiere gleichzeitig aus dem Selbsttränkebecken trinken, ist der Wasserverbrauch mit Vorteil dem Bedarf angepaßt. Insbesondere besitzt das erfindungsgemäße Selbsttränkebecken den Vorteil, daß Rohrleitungsmaterial gespart werden kann, weil nicht jedes der Zulaufventile mittels einer eigenen Rohrleitung an ein Wasserleitungsnetz angeschlossen zu werden braucht, sondern das Selbsttränkebecken lediglich einen Anschluß benötigt, mit dem die Zulaufventile des Selbsttränkebeckens, vorzugsweise über ein einziges Rohr, verbunden sind. Außerdem ersetzt das erfindungsgemäße Selbsttränkebecken mehrere Einzeltränkebecken, so daß auch die Herstellungskosten für die benötigten Selbsttränkebecken mit Vorteil niedriger sind.

Nach einer Weiterbildung der Erfindung ist jedes Betätigungselement eine um eine Schwenkachse schwenkbar gelagerte Betätigungsklappe, ist jedes Zulaufventil ein Schwenkventil mit einem um eine Achse schwenkbaren Schwenkarm, ist die Achse des Schwenkarmes parallel zur Schwenkachse der Betätigungsklappe ausgerichtet und liegt die Betätigungsklappe an dem zur Öffnung des Zulaufventils unter Federdruck zu schwenkenden Schwenkarm des Zulaufventiles an. Vorzugsweise werden bei dem erfindungsgemäßen Selbsttränkebecken an sich bekannte Zulaufventile verwendet, die durch Verschwenken des Schwenkarmes geöffnet werden, wobei der Schwenkarm der nach unten weisende Teil des Zulaufventils ist und das Wasser bei geöffnetem Zulaufventil durch den Schwenkarm hindurch in die Tränkwanne fließt. Das Verschwenken des Schwenkarmes erfolgt in vorteilhafter Weise indirekt durch ein Schwenken der Betätigungsklappe. Die Betätigungsklappe hängt in die Tränkwanne hinein, und die Tiere können sie durch Andrücken ihres Maules bzw. ihres Kopfes bewegen. Nach Loslassen der Betätigungsklappe schwenkt der Schwenkarm des Zulaufventiles unter Federdruck in seine Ausgangslage zurück, so daß sich das Zulaufventil selbsttätig wieder schließt. Die Betätigungsklappe überdeckt mit Vorteil die Schwenkarme mehrerer Zulaufventile, so daß alle der Betätigungsklappe zugeordnete Zulaufventile geöffnet werden, wenn ein Tier sein Maul an die Betätigungsklappe andrückt, auch wenn es dies zwischen zwei Zulaufventilen tut.

Bei einer bevorzugten Ausbildung des erfindungsgemäßen Selbsttränkebeckens ist die Schwenkachse an die Betätigungsklappe angeformt, wobei die Betätigungsklappe vorzugsweise eine von ihrer Oberfläche vorstehende Verstärkung aufweist, mit der sie an dem Zulaufventil anliegt. Die so ausgebildete Betätigungsklappe ist mit Vorteil ein einfach und kostengünstig herzustellendes Formteil, welches lediglich an der hierfür vorgesehenen Stelle des Selbsttränkebeckens angeordnet zu werden braucht. Vorzugsweise ist die Betätigungsklappe aus einem stranggepreßten Aluminiumprofil geformt. Auf diese Weise ist eine besonders kostengünstige Herstellung der relativ einfach ausgeformten Betätigungsklappe möglich. Bei der Fertigung wird ein endloser Strang gepreßt, der die vorgegebene Querschnittsform der Betätigungsklappe aufweist. Dieser Strang wird abschnittsweise auf die Länge zugeschnitten, die für die Betätigungsklappe vorgesehen ist. Die Betätigungsklappe muß so zugeschnitten werden, daß die Enden der vorzugsweise angeformten Schwenkachse etwas von den Stirnflächen der Betätigungsklappe vorstehen und in hierfür vorgesehene Lager eingeführt werden können. Der beim Zuschneiden der Betätigungsklappe anfallende Verschnitt ist nur gering und kann der die Strangprofile fertigenden Strangpresse mit Vorteil als Rohmaterial wieder zugeführt werden. Die Verwendung von Aluminium als Werkstoff für die Betätigungsklappe gewährleistet eine Witterungsbeständigkeit, insbesondere auch Seewasserbeständigkeit, sowie eine Ammoniakbeständigkeit der Betätigungsklappe.

Eine bevorzugte Ausbildung des erfindungsgemäßen Selbsttränkebeckens zeichnet sich dadurch aus, daß die Tränkwanne nach unten gewölbt ausgebildet ist, daß die Wölbung nach hinten in eine etwa lotrecht verlaufende Rückwand, an der die Zulaufventile angeordnet sind und nach vorn in eine relativ sanft ansteigende Schrägfläche übergeht und daß jede Betätigungsklappe vor den ihr zugeordneten Zulaufventilen mit den Enden ihrer Schwenkachsen in Lageraufnahmen gehalten sind, die in Seitenwänden angeordnet sind, die die rillenförmige Tränkwanne stirnseitig verschließen. Die Form der Tränkwanne ermöglicht den Tieren ein Eintauchen ihrer Mäuler in die Tränkwanne, gleichgültig ob es sich bei den Tieren um Kühe oder Schafe handelt. Den Tieren ist die sich vorzugsweise über die gesamte Länge der Tränkwanne erstreckende Betätigungsklappe zugewandt, während die Zulaufventile von der Betätigungsklappe verdeckt sind, so daß für die Tiere keine Verletzungsgefahr besteht. Die in den Seitenwänden der Tränkwanne angeordneten Lageraufnahmen für die Schwenkachsen der Betätigungsklappen sind vorzugsweise in die Seitenwände eingebrachte, nach oben offene Schlitze, die sich an ihren Enden zu einer runden Öffnung verbreitern, wobei die Schlitzbreite der Dicke der Betätigungsklappe und der Durchmesser der runden Öffnung dem Durchmesser ihrer Schwenkachse entspricht. Ein Einhängen einer Betätigungsklappe kann beispielsweise dadurch erfolgen, daß die Betätigungsklappe einseitig in eine Lageraufnahme eingeschoben wird, wobei sich die Betätigungsklappe in hochgeklapptem Zustand befindet, damit sie in dem Schlitz der Lageraufnahme verschoben werden kann. Sodann wird die Betätigungsklappe so weit in Richtung einer zweiten Lageraufnahme verschoben, bis sich das dieser Lageraufnahme zugewandten Ende ihrer Schwenkachse in der Lageraufnahme befindet. Die Betätigungsklappe ist ihrer Länge nach so bemessen, daß in dieser Stellung die Betätigungsklappe aus dem Schlitz der ersten Lageraufnahme freikommt und um die nunmehr in den Lageraufnahmen gelagerte Schwenkachse abwärts in die Tränkwanne verschwenkt werden kann, bis sie an den Zulaufventilen anliegt.

Bei einer bevorzugten Ausbildung des erfindungsgemäßen Selbsttränkebeckens ist die Tränkwanne aus einem gezogenen Aluminiumprofil ausgebildet. Die Tränkwanne kann auf diese Weise kostengünstig hergestellt werden und ist witterungsbeständig, insbesondere auch seewasserbeständig, sowie ammoniakbeständig. Vorzugsweise ist die Tränkwanne so stabil ausgebildet, daß Tierpfleger, die von einer Tiergruppe zu einer anderen gelangen möchten, über die dazwischen angeordneten Tränkwannen hinwegklettern können.

Bei einer anderen bevorzugten Ausbidlung ist in der Rückwand der Tränkwanne eine den Zulaufventilen wasserzuführende und die Zulaufventile miteinander verbindende Rohrleitung integriert. Die Rohrleitung kann vorzugsweise ein in einer Verstärkung der Rückwand ausgebildeter rohrförmiger Hohlraum sein. Eine Verlegung kostspieliger Rohre ist daher mit Vorteil nicht notwendig. Die Rohrleitung ist insbesondere nicht frei zugänglich, so daß sie keinen mechanischen Beanspruchungen und daraus resultierenden Beschädigungen direkt ausgesetzt ist.

Eine Weiterbildung der Erfindung zeichnet sich dadurch aus, daß die Tränkwanne ein entlang ihrer Vorderkante verlaufendes, einen etwa rechteckigen Querschnitt aufweisendes und nach unten geöffnetes Halterungsprofil aufweist und daß die Seitenflächen der Tränkwanne in Form von Stützlaschen, die mit der rückwärtigen Wandung des Halterungsprofiles abschließen und diese an ihren endseitigen Stirnflächen nach unten verlängern, über die Wandung der Tränkwanne hinaus fortgesetzt sind. Mit Hilfe des Halterungsprofiles kann das Selbsttränkebecken in vorteilhafter Weise an einem Traversträger mit entsprechendem rechteckigen Querschnitt angehängt werden, wobei das Halte-

rungsprofil den Traverstträger dreiseitig umgreift und die Tränkwanne so in einer etwa waagerechten Stellung hält. Zur Entlastung des Halterungsprofiles weisen die Seitenflächen der Tränkwanne Stützlaschen auf, die die Tränkwanne zusätzlich abstützen.

Bei einer bevorzugten Ausbildung des erfindungsgemäßen Selbsttränkebeckens weist die Tränkwanne insbesondere für Reinigungszwecke mit Vorteil in ihrem Bodenbereich wenigstens ein Ablaufventil auf.

Nach letzten Weiterbildungen der Erfindung weist die Tränkwanne wenigstens eine quer zu ihrer Längserstreckung verlaufende Zwischenwand auf, an der Achslager zur Aufnahme der Enden der Schwenkachsen von Betätigungsklappen angeordnet sind, wobei vorzugsweise zwischen der Zwischenwand und dem Boden der Tränkwanne ein einen Wasserdurchtritt ermöglichender Zwischenraum ausgespart ist. Die Zwischenwand, die vorzugsweise nur ab einer Gesamtlänge der Tränkwanne von etwa 1,20 m vorgesehen ist, sorgt für eine zusätzliche Versteifung der Tränkwanne, was insbesondere bei langausgedehnten Tränkwannen von Vorteil ist. Durch die Zwischenwand wird die Tränkwanne derart in Abschnitte geteilt, daß auch die diesen Abschnitten zugeordneten Betätigungsklappen an der Zwischenwand enden und in den hierfür vorgesehenen Achslagern gelagert sind. Durch den zwischen dem Boden der Tränkwanne und der Zwischenwand vorgesehenen Zwischenraum ist mit Vorteil ein Wasserdurchtritt möglich, so daß sich das in einem Abschnitt der Tränkwanne zulaufende Wasser in der gesamten Tränkwanne verteilen kann.

Ausführungsbeispiele, aus denen sich weitere erfinderische Merkmale ergeben, sind in der Zeichnung dargestellt. Es zeigen:

Fig. 1 eine Draufsicht auf ein erfindungsgemäßes Selbsttränkebecken,

Fig. 2 eine Draufsicht auf ein erfindungsgemäßes Selbsttränkebecken mit Zwischenwand,

Fig. 3 eine Seitenansicht eines erfindungsgemäßen Selbsttränkebeckens gemäß Fig. 1 oder 2,

Fig. 4 einen Querschnitt eines erfindungsgemäßen Selbsttränkebeckens gemäß Fig. 1 entlang der in Fig. 1 mit IV - IV
bezeichneten strichpunktierten Linie und

Fig. 5 ein Schnitt durch ein Selbsttränkebecken gemäß Fig. 2
entlang der in Fig. 2 mit V - V bezeichneten strichpunktierten Linie.


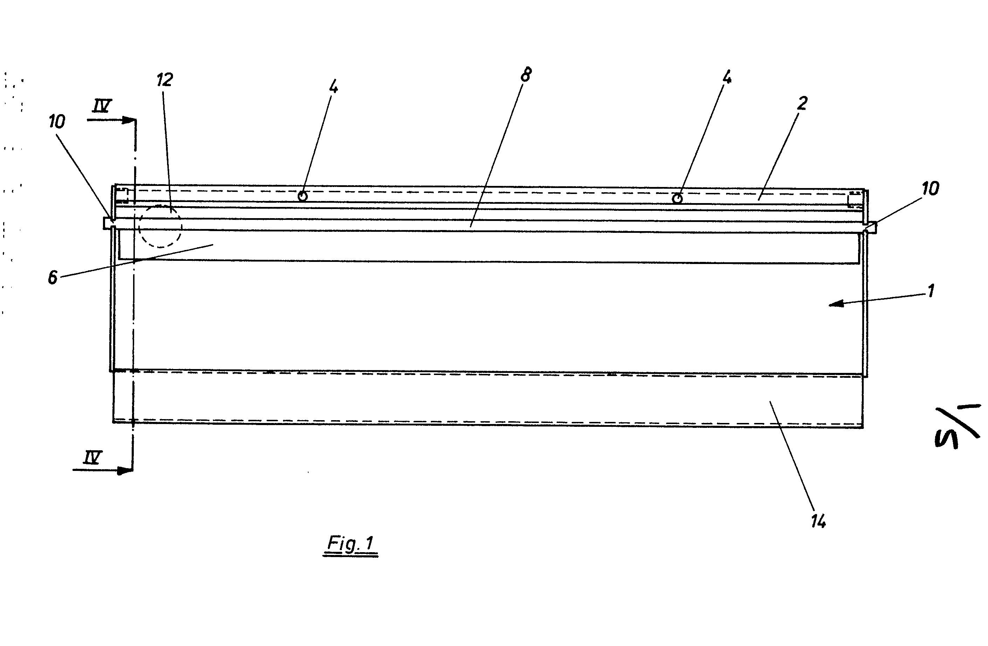

In Fig. 1 ist eine Draufsicht auf ein erfindungsgemäßes Selbsttränkebecken dargestellt. Das Selbsttränkebecken weist eine
über ihre ganze Länge oben offene und für mehrere nebeneinander vor dem Selbsttränkebecken stehende Kühe und Schafe frei
zugängliche Trinkwanne 1 auf.

Das Selbsttränkebecken ist über einen nicht dargestellten Anschluß mit einem Wasserleitungssystem verbunden, durch den Wasser in eine in der Rückwand der Tränkwanne 1 integrierte, als
Hohlraum ausgebildete Rohrleitung 2 gelangt. An der Rohrleitung 2 sind radial nach unten in die Tränkwanne 1 weisende Zulaufventile 4 angeordnet, die in der Fig. 1 durch Kreise angedeutet sind. Den Zulaufventilen 4 ist eine Betätigungsklappe 6
zugeordnet. Die Betätigungsklappe 6 erstreckt sich über die
ganze Länge der Tränkwanne 1 und ist mit den Enden einer an
ihrem oberen Rand angeformten Schwenkachse 8 in Lageraufnahmen
10, die in Seitenwänden der Tränkwanne 1 angeordnet sind,
schwenkbar eingehängt. Am Boden der Tränkwanne 1 ist ein Ablaufventil 12 angeordnet, das in der Fig. 1 mit einem gestrichelt gezeichneten Kreis angedeutet ist. An ihrer Vorderkante
weist die Tränkwanne 1 ein sich über ihre ganze Länge erstrekkendes, nach unten einseitig offenes und einen etwa rechteckigen Querschnitt aufweisendes Halterungsprofil 14 auf. Mit Hilfe dieses Halterungsprofiles 14 kann das Selbsttränkebecken an einem in der Fig. 1 nicht dargestellten Traversträger 16a rechteckigen Querschnittes angehängt werden, den es dreiseitig formschlüssig umgreift.

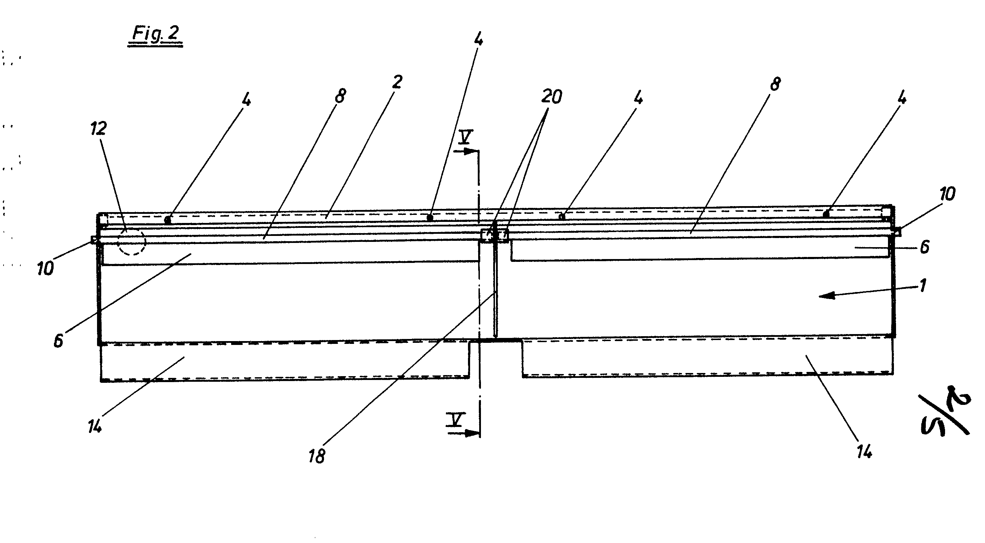

In Fig. 2 ist eine Draufsicht eines anderen Ausführungsbeispieles eines erfindungsgemäßen Selbsttränkebeckens als in Fig. 1 dargestellt. Gleiche Bauelemente sind mit gleichen Bezugszahlen bezeichnet wie in Fig. 1. Bei dem in Fig. 2 dargestellten Ausführungsbeispiel eines Selbsttränkebeckens ist etwa in der Mitte der Tränkwanne 1 eine Zwischenwand 18 eingesetzt. In jeder, der durch die Zwischenwand 18 entstandenen Hälften der Tränkwanne 1 ist eine Betätigungsklappe 6 mit ihrer Schwenkachse 8 eingehängt. Jeweils eines der Enden einer Schwenkachse 8 einer der Hälften der Tränkwanne 1 ist in eine Lageraufnahme 10 eingehängt, die in einer Seitenwand der Tränkwanne 1 angeordnet ist. Das jeweils andere Ende der Schwenkachse 8 ist in ein zylinderisch ausgebildetes Achslager 20 eingesetzt, das an der Zwischenwand 18 angeordnet ist. Desweiteren weist jede der Hälften der Tränkwanne 1 an ihrer Vorderkante ein Halterungsprofil 14 auf. Die in der Rückwand der Tränkwanne 1 befindliche Rohrleitung 2 verläuft ungeteilt über die gesamte Länge der Tränkwanne 1. Die Rohrleitung 2 weist in jeder der beiden Hälften der Tränkwanne 1 mehrere Zulaufventile 4 auf, die mittels einer gemeinsamen Betätigungsklappe 6 betätigt werden können. Die Zwischenwand 18 schließt nicht entlang ihres gesamten Randbereiches mit der Wandung der Tränkwanne 1 ab, so daß in der Tränkwanne 1 befindliches Wasser trotz der Zwischenwand 18 von einer Hälfte der Tränkwanne 1 in die andere gelangen kann. Im Boden der Tränkwanne 1 ist ein Ablaufventil 10 angeordnet.

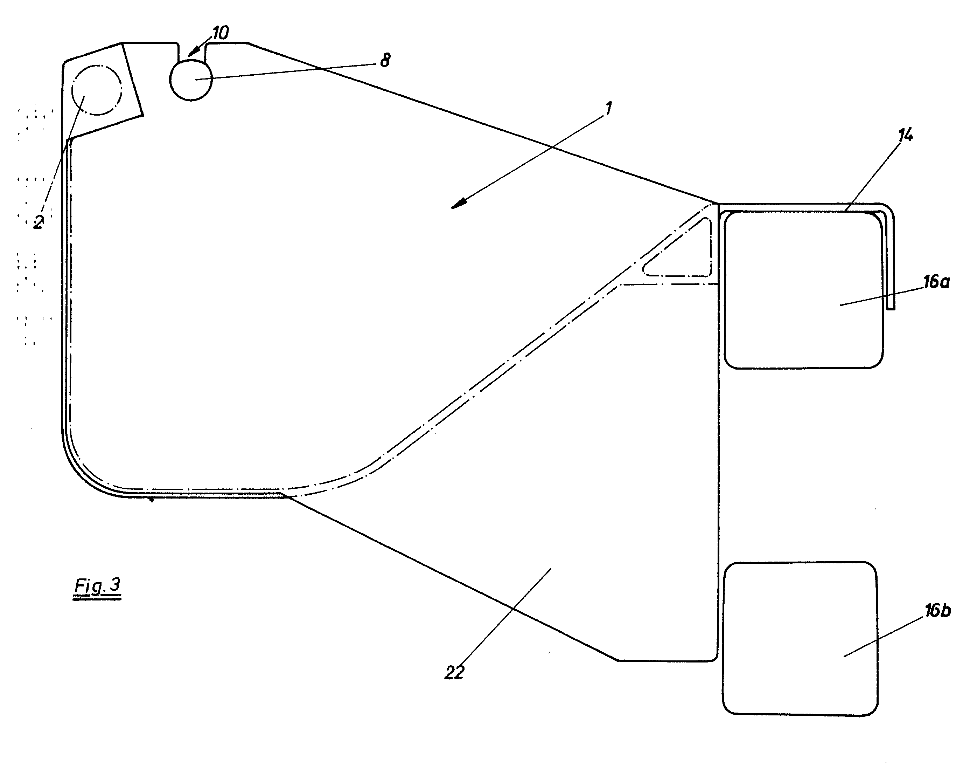

In Fig. 3 ist eine Seitenansicht eines erfindungsgemäßen Selbsttränkebeckens gemäß Fig. 1 oder 2 dargestellt. Gleiche Bauelemente sind mit gleichen Bezugszahlen bezeichnet, wie in den Fig. 1 und 2. In der Seitenansicht ist insbesondere die nach unten gewölbt ausgebildete Form der Tränkwanne 1 zu erkennen. Desweiteren sind in der Fig. 3 Traversträger 16a, 16b rechteckigen Querschnittes dargestellt, die übereinander und parallel zueinander verlaufen. An dem oberen Traversträger 16a ist das Halterungsprofil 14 der Tränkwanne 1 angehängt, wobei das Halterungsprofil 14 den Traversträger 16a dreiseitig umgreift und so die Tränkwanne 1 etwa in einer waagerechten Stellung hält. Zur statischen Entlastung des Halterungsprofiles 14 sind die Seitenwände der Tränkwanne 1 über die Wandung der Tränkwanne 1 hinaus in Form von Stützlaschen 22 verlängert. Die Stützlaschen 22 stützen die Tränkwanne 1 gegen den unteren Traversträger 16b ab und sorgen so für eine stabilere Halterung des Selbsttränkebeckens.

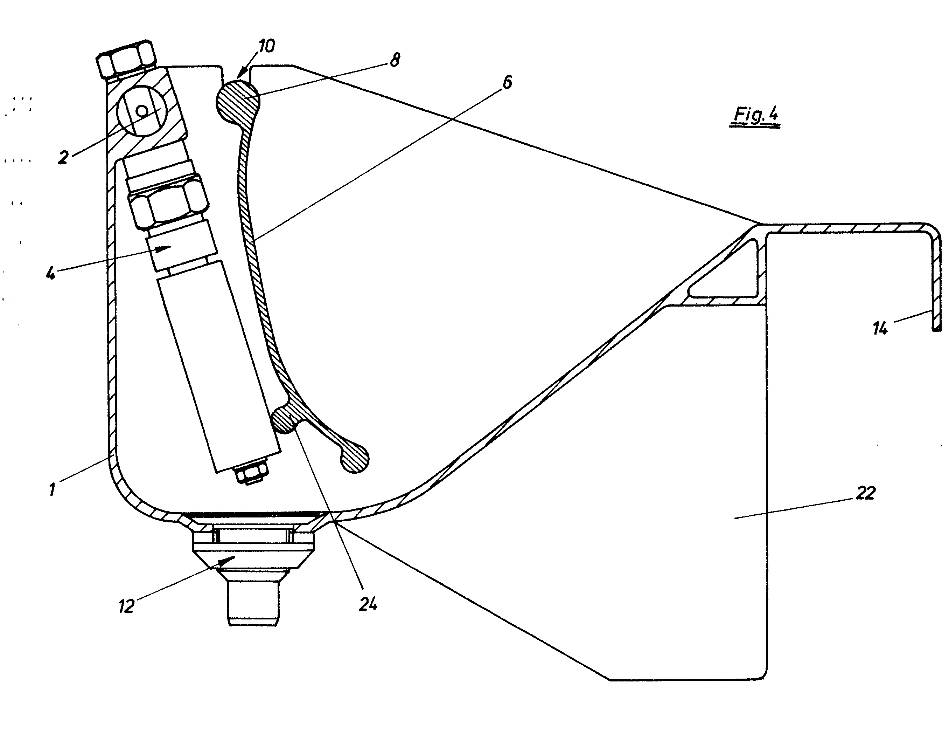

In Fig. 4 ist ein Querschnitt durch ein erfindungsgemäßes Selbsttränkebecken dargestellt. Gleiche Bauelemente sind mit gleichen Bezugszahlen bezeichnet, wie in den vorhergehenden Figuren. In der Fig. 4 ist zu erkennen, daß die Betätigungsklappe 6 in ihrem unteren Bereich eine entlang ihrer Längserstreckung verlaufende, vorstehende Verstärkung aufweist, mit der sie an den als Schwenkventile ausgebildeten Zulaufventile 4 anliegt. Die unteren Abschnitte der Zulaufventile 4 sind als Schwenkarme ausgebildet und um gedachte Achsen, die parallel zur Schwenkachse 8 der Betätigungsklappe 6 verlaufen schwenkbar. In abgeknickter Stellung befindet sich ein Zulaufventil 4 in seiner Öffnungsstellung, in der Wasser von der Rohrleitung 2 durch das Zulaufventil 4 hindurch in die Tränkwanne 1 einläuft. In der Fig. 4 ist insbesondere auch zu erkennen, daß die Rohrleitung 2 in eine randseitige Verstärkung der Rückwand der Tränkwanne 1 integriert ist.

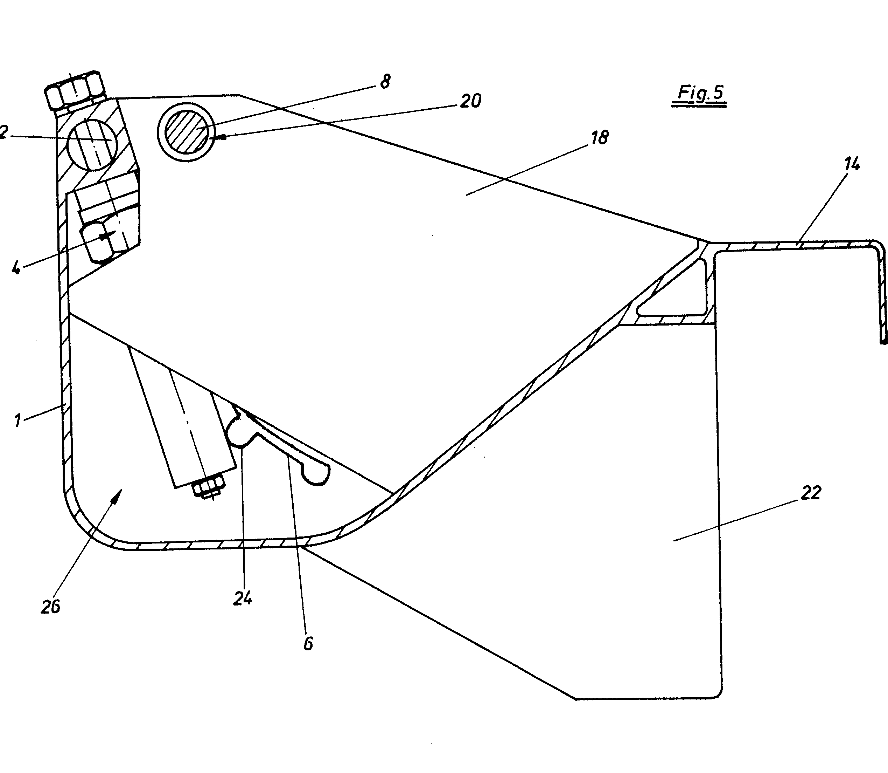

In Fig. 5 ist ein Querschnitt durch ein erfindungsgemäßes Selbsttränkebecken dargestellt, in dem eine Seitenansicht einer Zwischenwand 18 zu erkennen ist. Gleiche Bauelemente sind wieder mit gleichen Bezugszahlen bezeichnet, wie in den vorhergehenden Figuren. In Fig. 5 ist insbesondere zu erkennen, daß die Zwischenwand 18 in ihrem unteren Bereich nicht formschlüssig an der Wandung der Tränkwanne 1 anliegt, so daß sich das in der Tränkwanne 1 befindliche Wasser durch einen Zwischenraum 26, der sich zwischen der Zwischenwand 18 und der Wandung der Tränkwanne 1 befindet, in der gesamten Tränkwanne 1 verteilen kann.

Patentansprüche:

1. Selbsttränkebecken für ein Viehtransportschiff für Kühe und Schafe zur Selbsttränkung des transportierten Viehs während des Schiffstransportes mit wenigstens einem vom Vieh mittels eines Betätigungselementes betätigbaren Zulaufventil zur bedarfsweisen Einleitung von Wasser in eine Tränkwanne, dadurch gekennzeichnet, daß die Tränkwanne (1) rinnenförmig ausgebildet ist, daß über die gesamte Länge der Tränkwanne (1) verteilt Zulaufventile (4) angeordnet sind und daß jeweils mehreren der Zulaufventile (4) ein gemeinsames, sich über einen Abschnitt der Tränkwanne (1) erstreckendes Betätigungselement zugeordnet ist.

2. Selbsttränkebecken nach Anspruch 1, dadurch gekennzeichnet, daß jedes Betätigungselement eine um eine Schwenkachse (8) schwenkbar gelagerte Betätigungsklappe (6) ist, daß jedes Zulaufventil (4) ein Schwenkventil mit einem um eine Achse schwenkbaren Schwenkarm ist, daß die Achse des Schwenkarmes parallel zur Schwenkachse (8) der Betätigungsklappe (6) ausgerichtet ist und daß die Betätigungsklappe (6) an dem zur Öffnung des Zulaufventils (4) unter Federdruck zu schwenkenden Schwenkarm des Zulaufventils (4) anliegt.

3. Selbsttränkebecken nach Anspruch 2, dadurch gekennzeichnet, daß die Schwenkachse (8) an die Betätigungsklappe (6) angeformt ist.

4. Selbsttränkebecken nach einem der Ansprüche 2 oder 3, dadurch gekennzeichnet, daß die Betätigungsklappe (6) eine von ihrer Oberfläche vorstehende Verstärkung (24) aufweist, mit der sie an dem Zulaufventil (4) anliegt.

5. Selbsttränkebecken nach einem der Ansprüche 2 - 4, dadurch ge-

kennzeichnet, daß die Betätigungsklappe (6) aus einem stranggepreßten Aluminiumprofil geformt ist.

6. Selbsttränkebecken nach einem der vorhergehenden Ansprüche, dadurch gekennzeichnet, daß die Tränkwanne (1) nach unten gewölbt ausgebildet ist, daß die Wölbung nach hinten in eine etwa lotrecht verlaufende Rückwand, an der die Zulaufventile (4) angeordnet sind und nach vorn in eine relativ sanft ansteigende Schrägfläche übergeht, und daß jede Betätigungsklappe (6) vor den ihr zugeordneten Zulaufventilen (4) mit den Enden ihrer Schwenkachsen (8) in Lageraufnahmen (10) gehalten sind, die in Seitenwänden angeordnet sind, die die rillenförmige Tränkwanne (1) stirnseitig verschließen.

7. Selbsttränkebecken nach einem der vorhergehenden Ansprüche, dadurch gekennzeichnet, daß die Tränkwanne (1) aus einem gezogenen Aluminiumprofil ausgebildet ist.

8. Selbsttränkebecken nach einem der Ansprüche 6 oder 7, dadurch gekennzeichnet, daß in der Rückwand der Tränkwanne (1) eine den Zulaufventilen (4) Wasser zuführende und die Zulaufventile (4) miteinander verbindende Rohrleitung (2) integriert ist.

9. Selbsttränkebecken nach einem der vorhergehenden Ansprüche, dadurch gekennzeichnet, daß die Tränkwanne (1) ein entlang ihrer Vorderkante vorlaufendes, einen etwa rechteckigen Querschnitt aufweisendes und nach unten geöffnetes Halterungsprofil (14) aufweist und daß die Seitenflächen der Tränkwanne (1) in Form von Stützlaschen (22), die mit der rückwärtigen Wandung des Halterungsprofil (14) abschließen und diese an ihren endseitigen Stirnflächen nach unten verlängern, über die Wandung der Tränkwanne (1) hinaus fortgesetzt sind.

10. Selbsttränkebecken nach einem der vorhergehenden Ansprüche,

0203254

dadurch gekennzeichnet, daß die Tränkwanne (1) in ihrem Bodenbereich wenigstens ein Ablaufventil (12) aufweist.

11. Selbsttränkebecken nach einem der vorhergehenden Ansprüche, dadurch gekennzeichnet, daß die Tränkwanne (1) wenigstens eine quer zu ihrer Längserstreckung verlaufende Zwischenwand (11) aufweist, an der Achslager (20) zur Aufnahme der Enden der Schwenkachsen (8) von Betätigungsklappen (6) angeordnet sind.

12. Selbsttränkebecken nach Anspruch 11, dadurch gekennzeichnet, daß zwischen der Zwischenwand (11) und dem Boden der Tränkwanne (1) ein einen Wasserdurchtritt ermöglichender Zwischenraum (26) ausgespart ist.

0203254

1/5

Fig.1

10 1 14 2 4 8 4 12 10 6 IV IV

Fig. 2

Fig. 3

Fig. 4

Fig.5

5/5

0203254